# EUROPEAN PATENT SPECIFICATION

(11) **EP 3 708 317 B1**
(45) Date of publication and mention of the grant of the patent: **03.08.2022**
(21) Application number: 20163085.2
(22) Date of filing: 13.03.2020
(51) Int. Cl.: B27B 9/04, B23D 45/02

(54) **TRACK SAW SYSTEM**
FÜHRUNGSÄGENSYSTEM
SYSTÈME DE GUIDAGE DE SCIE

(30) Priority: 14.03.2019 US 201962818405 P; 10.12.2019 US 201962942373 P
(43) Date of publication of application: 16.09.2020
(73) Proprietor: Techtronic Cordless GP, Anderson, SC 29621 (US)
(72) Inventor: CHEATHAM, Reid, Greenville South Carolina 29605 (US); VAN BERGEN, Jonathan R., Easley South Carolina 29642 (US); GROVES, Jeffrey, Greenvile South Carolina 29607 (US)
(74) Representative: Novagraaf Group

(56) References cited:
- US-A- 2 596 524
- US-A- 2 630 146
- US-A- 2 903 026
- US-A- 3 384 135
- US-A- 5 651 298

## Description

### FIELD OF THE INVENTION

The present disclosure relates to power tools, and more particularly to a track saw system according to the preamble of claim 1.

### BACKGROUND TO THE INVENTION

Track saws are traditionally used to make relatively long, straight cuts in sheets of work material. Generally, a saw is translated along a track that is aligned as desired on the sheet of work material. Tracks can be oriented at a desired miter angle within the plane of the sheet of work material relative to an edge of the sheet. Also, with traditional track saw systems, a user must remove the track from the sheet of work material after performing a miter cut, therefore requiring the user to set up the track at the desired miter angle again if it is desired to cut another sheet of work material at the same miter angle.

According to its opening statement, US-A-2903026 discloses a track saw system according to the preamble of claim 1, and in particular a guide means for saws, and more particularly to a miter-guide for portable skillsaws and the like. It contemplates a miter-guide for attachment to a workbench or the like and which supports a portable saw for linear movement in any of a plurality of predetermined directions. The saw may also be accurately positioned for ripping. The miter-guide is adapted for pivotal movement about a vertical axis which intersects the edge of the workpiece at which cutting is to begin. When successive miter curts are to be made on the same workpiece, the angle of the saw blade may be changed without altering the position of the starting point. The support for the saw is hinged about a rod member, with the latter providing means for sliding adjustment of the support to accommodate saws having different frame dimensions.

### SUMMARY OF THE INVENTION

According to the invention there is provided a track saw system defined by the features of claim 1 and configured to make a straight cut in a work piece supported upon a stand.

Preferably, the first hinge may also be configured to laterally translate the track with respect to the base.

Preferably, the second hinge may also be configured to translate the track to adjust a height of the track with respect to the base.

The base includes a table supportable upon the stand and an arm to which the edge locator is coupled, and according to the invention, the arm is slidable relative to the table to adjust the location of the edge locator relative to the table.

Preferably, wherein the arm may be a first arm, and wherein the base may further include a second arm slidable relative to the table and a first extension tube extending between the first and second arms.

Preferably, the track saw system may further comprise: a first extension tube extending from the base; and a cross-fitting having a first bore through which the first extension tube is received, and wherein a combination of the first extension tube and the cross-fitting may define the first hinge.

Preferably, the track saw system may further comprise a second extension tube that extends generally orthogonal from the track, and wherein the cross-fitting may include a second bore through which the second extension tube is received.

Preferably, the first and second bores in the cross-fitting may define first and second axes, respectively, and wherein the first and second axes may be offset and oriented orthogonal to each other.

Preferably, a combination of the second extension tube and the cross-fitting may define the second hinge.

Preferably, a position of the cross-fitting may be independently adjustable both rotationally about and translationally along both the first extension tube and the second extension tube.

Preferably, the track saw system may further comprise a locking mechanism configured to lock the rotational position of the second extension tube, and thus the track, relative to the cross-fitting about the second axis.

Preferably, the track saw system may further comprise a locking mechanism configured to lock the axial position of the cross-fitting, and thus the track, relative to the first extension tube along the first axis.

Preferably, the track saw system may further comprise a bracket to which the track is removably coupled, wherein the bracket includes a handle portion configured to be grasped by an operator to adjust the miter angle of the track.

Preferably, the track saw system may further comprise a miter gauge indicating assembly including a miter scale and a pointer, wherein the miter gauge indicating assembly may be configured to indicate the miter angle of the track relative to the edge.

Preferably, the miter scale may be beneath the track and may be configured to abut the edge of the work piece.

Preferably, the pointer may be defined on the track.

Preferably, the track may include a window therethrough to provide a line of sight through the track to the miter scale beneath the track.

Preferably, the miter scale may be provided on a top surface of the track, and wherein the pointer may be provided by aligning the edge of the work piece with a desired miter angle shown on the miter scale.

Preferably, the miter scale may be offset from the track to provide a line of sight to the miter scale without interference from the track.

Preferably, the miter angle indicating assembly may include a linkage mechanism coupling the track to the pointer, and wherein the pointer may be movable relative to the miter scale to indicate the miter angle of the track relative to the edge of the work piece.

Preferably, the track saw system may further comprise a saw supported upon the track for sliding movement therewith.

Other features and aspects of the invention will become apparent by consideration of the detailed description and accompanying drawings. Any feature(s) described herein in relation to one aspect or embodiment may be combined with any other feature(s) described herein in relation to any other aspect or embodiment as appropriate and applicable, within the scope of the claims.

### BRIEF DESCRIPTION OF THE DRAWINGS

FIG. 1 is a perspective view of the track saw system in accordance with an embodiment of the present disclosure.
FIG. 2 is an alternate perspective view of the track saw system of FIG. 1.
FIGS. 2A-2D are top views of indicating assemblies of the track saw system of FIG. 1.
FIG. 3 is a side view of the track saw system of FIG. 1, illustrating a track in a raised position.
FIG. 4 is a side view of a track saw system in accordance with another embodiment of the present disclosure, illustrating a track in a raised position.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways within the scope of the claims. Also, it is to be understood that the phraseology and terminology used herein is for the purpose of description and should not be regarded as limiting.

### DETAILED DESCRIPTION

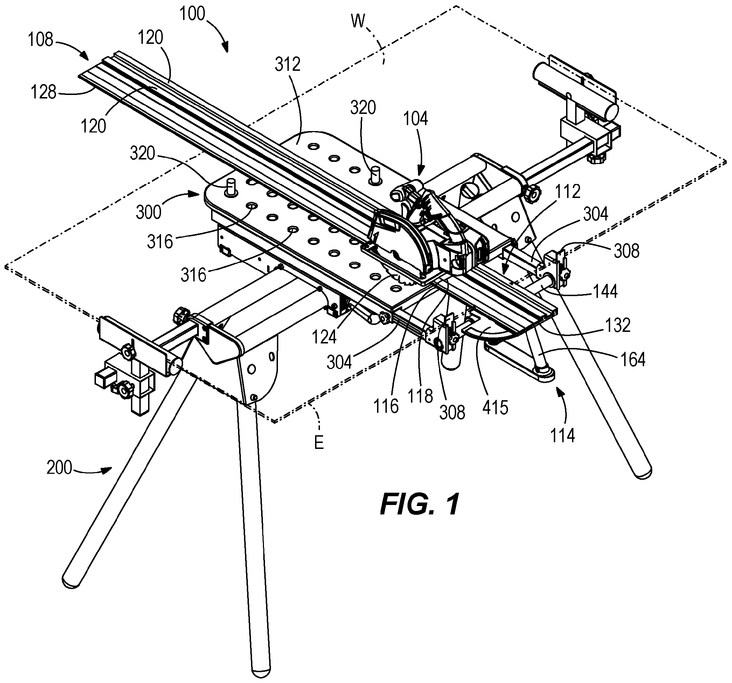

FIG. 1 illustrates a track saw system 100 according to an embodiment of the disclosure. The track saw system 100 includes a track saw 104, a track 108, an angle finding device or miter gauge 112, and a pivot hinge assembly 114 configured to lift the track 108 from a work piece before and/or after a cutting operation is performed. The track saw 104 includes a shoe 116 having grooves 118 that correspond to parallel rails 120 of the track 108. The grooves 118 in the shoe 116 receive the exterior rails 120 of the track 108, and enable the saw 104 to slide along the track 108 such that a blade 124 of the track saw 104 translates parallel to the track 108 along a cut line coinciding with one edge 128 of the track 108.

The track saw system 100 is supported by a stand 200 through a base 300. The stand 200 may be considered a miter saw stand by one of ordinary skill in the art at the time of the invention. The stand 200 is capable of supporting large and heavy work pieces W thereon at a height disposed from the ground which is comfortable for a user to access the base 300 and the track saw system 100. The base 300 includes at least one arm 304 having an edge locator 308 at an end thereof. According to the invention, a user may slidably translate the arm 304 with the base such that the location of the edge locator 308 translates relative to the base 300. This allows the base 300 to accommodate varying sizes of work pieces W. In a cutting position of the work piece W on the base 300, an edge E of the work piece W abuts (i.e., engages) the edge locator 308. The base 300 also includes a table 312 having a plurality of holes 316 in which stand-offs or posts 320 may be received in a number of different positions throughout the table 312. The posts 320 support a work piece W, and prevent sagging and/or bowing of the work piece W during the cutting operation. The posts 320 provide a clearance between the base 300 and a bottom surface of the work piece W such that the blade 124 can cut through the work piece W without cutting the table 312. The posts 320 can be shifted from one hole to another such that the posts 320 are not aligned with the cut line coinciding with the edge 128 of the track 108 in any adjusted miter angle of the track 108.

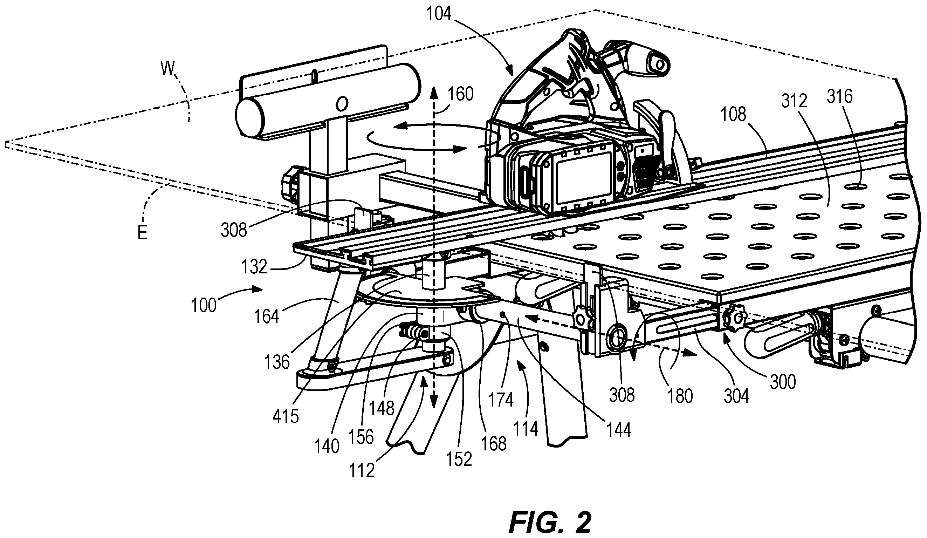

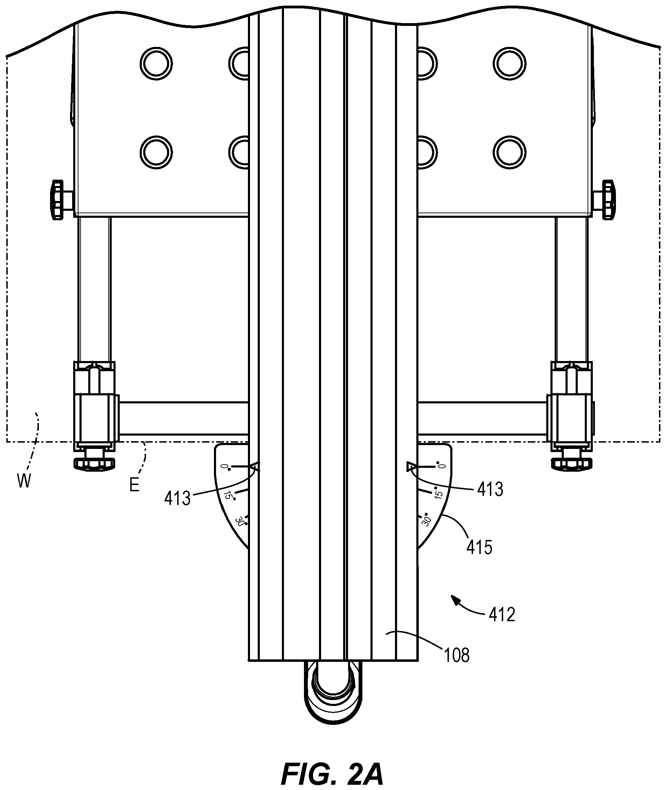

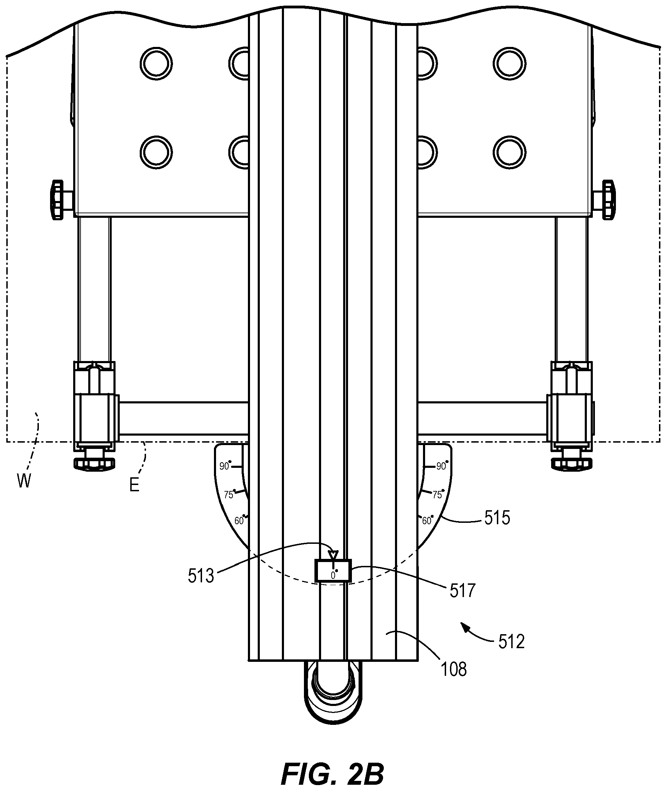

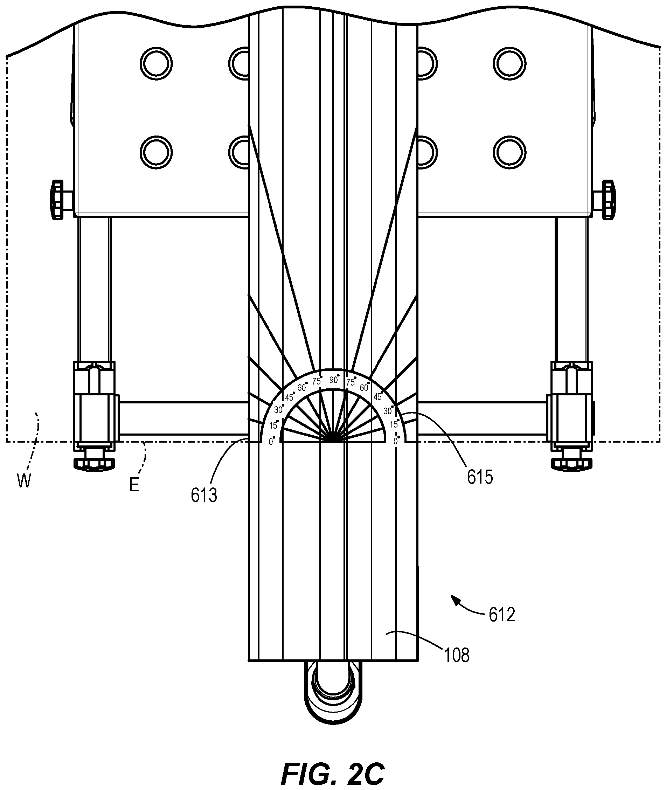

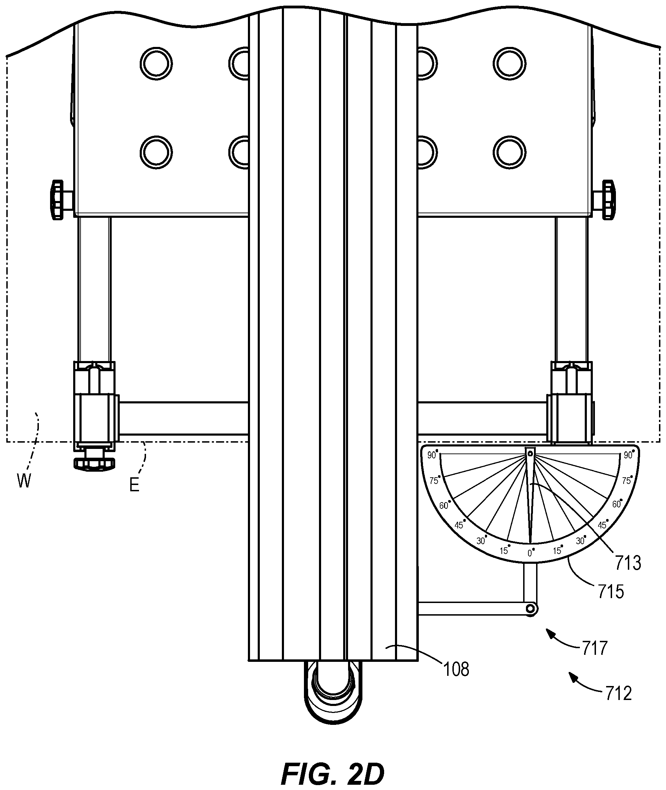

With reference to FIG. 2, the miter gauge 112 includes a bracket 132 that is attachable to the track 108 (e.g., the lower surface and/or a receptacle defined in the track 108). The bracket 132 can be vertically displaced to adjust a distance between the track 108 and the table 312. The bracket 132 is attachable to an extension tube 136 that extends generally orthogonal from the track 108. The extension tube 136 is received and slidable within a cross-fitting 140, which in turn is slidably supported upon a lateral extension tube 144. A miter clamp 148 includes a split collar 152 encircling the extension tube 136 and an over-center cam lever 156 to selectively apply a clamping force to the collar 152, and thus the extension tube 136, to lock the extension tube 136 and the track 108 at a fixed height with respect to the table 312. This adjustment permits various thicknesses of work pieces W to fit between the track 108 and the table 312. The miter clamp 148 may be positioned, above, below, or otherwise adjacent the cross-fitting 140 to hold the cross-fitting 140 in place when the miter clamp 148 is engaged. The miter clamp 148 also holds the cross-fitting 140 in place with the track 108 at the desired miter angle defined between the edge 128 of the track 108 and the edge E of the work piece W. In one embodiment of the system 100, the bracket 132 is also detachable from the track 108, permitting the user to remove the miter gauge 112 from the track 108 for storage or transport. In another embodiment of the system 100, the bracket 132 may be permanently affixed to the track 108 (e.g., by integrally forming the bracket 132 and track 108, or by fastening the bracket 132 to the track 108).

As illustrated in FIG. 2, the miter gauge 112 is capable of being rotated about an axis 160 defined by the extension tube 136 to a desired miter angle defined between the edge 128 of the track 108 and the edge E of the work piece W (and thus a plane defined by the aligned edge locators 308). The bracket 132 includes a handle portion 164, which a user can grasp to move and reposition the bracket 132. The miter gauge 112 further includes a pointer (not shown) and a scale (not shown) to indicate the particular miter angle to which the miter gauge 112 is set. Detents (not shown) may be provided to produce an audible and/or tactile indication to a user that the miter gauge 112 is adjusted to a predefined common miter angle (e.g., 45 degrees, 22.5 degrees, etc.). In one embodiment, detents engage the extension tube 136, and stops engage the cross-fitting 140. In other embodiments, detents may be attached to other components of the miter gauge 112 such as, without limitation, the collar 152, the handle 164, or the bracket 132. In other embodiments, detents may be provided as a part of the stand 200 or the base 300 to provide predefined common miter angle stops to the miter gauge 112. In further other embodiments, the detents may be replaced with another structure for stopping the track 108 at a common miter angle relative to the edge E. This other structure may be, without limitation, a biased pin engaging a through hole in a plate, a discretely telescoping tube engaging the track 108, or a hinge permitting rotation through discrete ranges of motion with stops at common miter angles. Optionally, the miter gauge 112 may include an electronic display to provide a user indication of the angle of the track 108 relative to the edge E. This electronic display may numerically, diagrammatically, or otherwise allow a user to view the angle of the track 108.

FIGS. 2A-2D illustrate miter gauge indicating assemblies 412, 512, 612, 712. The miter gauge indicating assemblies 412, 512, 612, 712 each include a pointer 413, 513, 613, 713 and a scale 415, 515, 615, 715 to indicate the particular miter angle to which the respective miter gauge 112 is set. The illustrated and described miter gauge indicating assemblies 412, 512, 612, 712 are non-limiting examples of indicating assemblies which may be combined with the miter gauge 112 to indicate the position of the track 108 relative to the edge E.

In a first indicating assembly 412 shown in FIG. 2A, the scale 415 is beneath the track 108 and is configured to abut the edge E of the work piece W. The pointer 413 is applied to the track 108 in a post-process operation such as, without limitation, painting or etching of the pointer 413 on the track.

In a second indicating assembly 512 shown in FIG. 2B, the scale 515 is beneath the track 108, and is configured to abut the edge E of the work piece W. The pointer 513 may be adjacent a window 517 or other aperture within the track 108. The window 517 may be cut or otherwise removed from the track 108 in a post-process operation of the track 108. The window 517 provides a user a line of sight through the track 108 to the scale 515 beneath the track 108.

In a third indicating assembly 612 shown in FIG. 2C, the scale 615 is provided on the top surface of the track 108. The scale 615 is applied to the track 108 in a post-process operation such as, without limitation, painting or etching of the scale 615 on the track 108. In this embodiment, the pointer 613 is provided by aligning the edge E of the work piece W with the desired angle shown on the scale 615. In other words, the edge E acts as the pointer 613 in the third indicating assembly 612.

In a fourth indicating assembly 712 shown in FIG. 2D, the scale 715 can be attached to the track 108 through a linkage mechanism 717 which is connected to the track 108. The scale 715 abuts the edge E of the work piece W in a position not vertically aligned with the track 108. This vertical misalignment of the scale 715 from the track 108 allows a user a line of sight to the scale 715 without interference from the track 108. The pointer 713 is provided with the scale 715, and is permitted to rotate with the linkage mechanism 717 as the track 108 is rotated to a mitered position relative to the edge E.

During operation, the user can adjust the miter angle of the track 108 relative to the edge E of the work piece W. With the miter gauge 112 attached to the track 108, the user aligns the edge locator 308 against the edge E of a work piece W. The user releases the miter clamp 148 and rotates the combination of the bracket 132, the extension tube 136, the handle 164, and the track 108 relative to the edge locator 308 until a desired miter angle is achieved. During this operation, the cross-fitting 140 can be slidable along the extension tube 144 or locked to the extension tube 144, as described in further detail below. If the desired miter angle coincides with a predefined common miter angle, the detent or stop will provide an audible and/or tactile indication to the user upon reaching the desired miter angle. At this point, the miter clamp 148 is tightened to maintain the desired angle while the saw 104 is slid across the track 108 to perform a cutting operation. The miter clamp 148 allows for vertical translation of the track 108 relative to the table 312 and radial adjustment (i.e., miter angle adjustment) of the track 108 relative to the edge E of the work piece W.

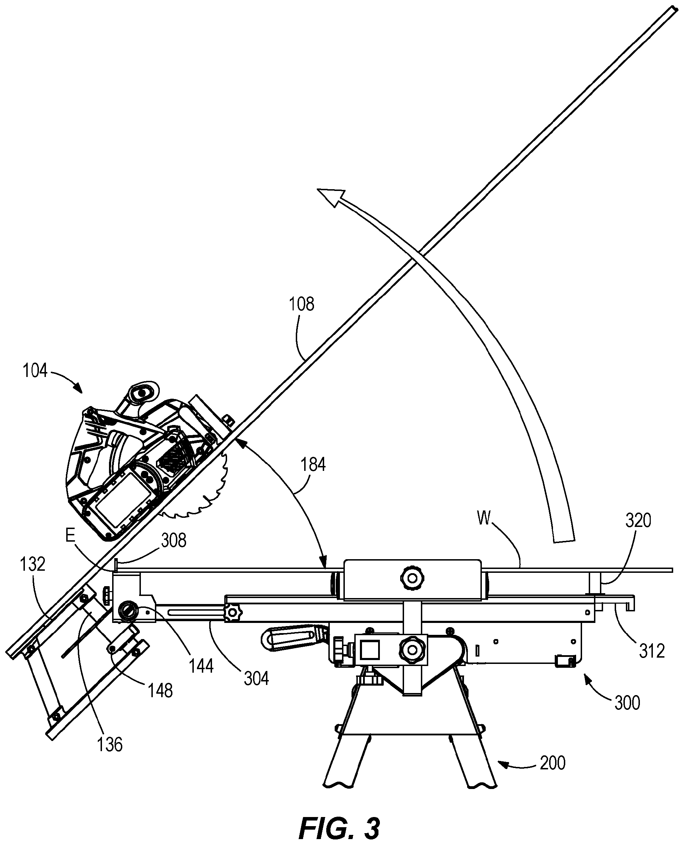

The pivot hinge assembly 114 of the track saw system 100 is capable of lifting the track 108 away from the table 312 and translating the track 108 laterally. The pivot hinge assembly 114 includes the lateral extension tube 144 and a hinge clamp 168. The hinge clamp 168 may include a split collar and an over-center cam lever similar to the miter clamp 148. Alternatively, the hinge clamp 168 may include a spring-biased detent. The illustrated hinge clamp 168 includes a bolt 170 extending from one side of the lateral extension tube 144, through a hole 174 the lateral extension tube 144, and engaging a nut (not shown) on the opposite side of the lateral extension tube 144. The extension tube 144 may include multiple holes 174 for selectively positioning the cross-fitting 140 at various discrete positions along the extension tube 144. Hinge clamps 168 and bolts 170 may be positioned on one or both sides along the axis 180 when compared to the cross-fitting 140. The bolt 170 and nut selectively apply a clamping force to the hinge clamp 168 onto the lateral extension tube 144. Other means of fastening the cross-fitting 140 along the extension tube 144 are possible. The hinge clamp 168 may be positioned to the left of, to the right of, or otherwise adjacent the cross-fitting 140 to hold the cross-fitting 140 in place when the hinge clamp 168 is engaged. The cross-fitting 140 is both translatable and rotatable relative to the lateral extension tube 144. The lateral position of the cross-fitting 140 along the lateral extension tube 144 is selectively fixed to the lateral extension tube 144, and thus the remainder of the base 300, through the hinge clamp 168. As shown in FIG. 3, the hinge clamp 168 is also capable of securing the cross-fitting 140 at a given rotational position about an axis 180 defined by the lateral extension tube 144 such that the track 108 may be angled relative to a work piece W at a desired hinge angle 184. The axis 180 of the lateral extension tube 144 is orthogonal to the axis 160 of the extension tube 136, and the two axes 160, 180 do not intersect each other. In the illustrated embodiment, the axis 160 is closer to the handle portion 164 than the axis 180. The cross-fitting 140 is capable of independent adjustment rotationally about and translational along both the axis 160 and the axis 180. The hinge clamp 168 can also be loosened relative to the lateral extension tube 144 to permit translation of the cross-fitting 140 along the lateral extension tube 144. When the hinge clamp 168 is tightened, the position of the cross-fitting 140 along the lateral extension tube 144 is fixed. In some embodiments, the a combination of the cross-fitting 140 and the extension tube 144 defines a first hinge of the track saw system 100 that pivotably couples the track 108 to the base 300 about the pivot axis 180 to permit pivoting movement of the track 108 relative to the base 300 in a direction extending away from the base 300. And, in some embodiments, a combination of the cross-fitting 140 and the extension tube 136 defines a second hinge pivotably coupling the track 108 to the base 300 about another pivot axis 160 transverse to the pivot axis 180 to permit pivoting movement of the track 108 relative to the base 300 to adjust a miter angle between the track 108 and the edge E of the work piece W.

In operation of the pivot hinge assembly 114, the track 108 may be locked in a raised position as shown in FIG. 3. A user places a work piece W on the table 312 with the edge E abutting the edge locator 308. The user unlocks the hinge clamp 168 and rotates the track 108 downwards (i.e., opposite the arrow in FIG. 3) such that it rests upon the work piece W. A lateral position of the track 108 can be adjusted by sliding the cross-fitting 140 along the lateral extension tube 144. The user can then release the miter clamp 148 of the miter gauge 112 to set a vertical position of the track 108 and the miter angle of the track 108, if a change in track height and/or miter angle is desired. With the track 108 in position, the saw 104 can be translated along the track 108 to cut the work piece W. After the cutting operation, the user can unlock the hinge clamp 168, pivot the track upward and away from the table 312 (i.e., away from the lowered position in the direction of the arrow in FIG. 3), and lock the track 108 in the raised position without disturbing the vertical position and miter angle of the miter gauge 112. The user can replace the cut work piece from the table 312 with another work piece W, and repeat the process of operating the pivot hinge assembly 114 with the new work piece W positioned on the table 312. Optionally, with the miter gauge 112 and the pivot hinge assembly 114, the user can adjust the lateral position, vertical position, and miter angle of the track 108 with the new work piece W or when making an additional cut in the first work piece.

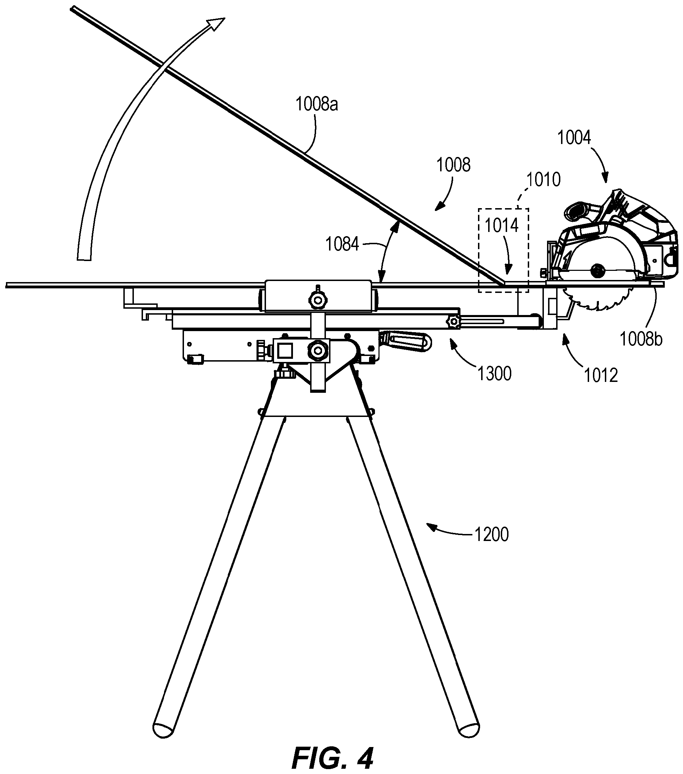

In another embodiment of a track saw system 1000 shown in FIG. 4, with like features being labeled with like reference numerals, a hinge 1014 is positioned between opposite ends of the track 1008 to permit a first portion 1008a of the track 1008 to be inclined relative to a stationary or second portion 1008b of the track 1008 (and the attached base 1300). In this embodiment, the hinge 1014 permits a user to pivot the movable portion 1008a of the track 1008 relative to the stationary portion 1008b of the track 1008 in a direction away from the base 1300 (i.e., along the arrow in FIG.4). In this embodiment, the stationary portion 1008b of the track 1008 can support the saw 1004 when the movable portion 1008a of the track 1008 is inclined relative to the stationary portion 1008b of the track 1008 to, for example, exchange a work piece to be cut. It is envisioned that a locking mechanism 1010 between the movable portion 1008a and stationary portion 1008b of the track 1008 is capable of maintaining the movable portion 1008a in an inclined position (i.e., at a given hinge angle 1084) while the work pieces are exchanged. The stationary portion 1008b of the track 1008 is capable of miter angle adjustment and vertical adjustment using a miter gauge 1012 like that disclosed in connection with the track saw system 100.

Various features of the invention are set forth in the following claims.

## Claims

1. A track saw system (100; 1004) configured to make a straight cut in a work piece (W) supported upon a stand (200; 1200), the track saw system comprising:
a base (300; 1300) configured for attachment to the stand (200; 1200), the base having an edge locator (308) against which the work piece (W) is engagable;
a track (108; 1008) pivotably coupled to the base (300; 1300);
a first hinge pivotably coupling the track (108; 1008) to the base (300; 1300) about a first pivot axis (180) to permit pivoting movement of the track relative to the base in a direction extending away from the base; and
a second hinge pivotably coupling the track (108; 1008) to the base (300; 1300) about a second pivot axis (160) transverse to the first pivot axis (180) to permit pivoting movement of the track relative to the base to adjust a miter angle between the track (108; 1008) and the edge (308);
wherein
the base (300; 1300) includes a table (312) supportable upon the stand (200; 1200) , **characterized in that** the base further includes an arm (304) to which the edge locator (308) is coupled, and wherein the arm (304) is slidable relative to the table (312) to adjust the location of the edge locator (308) relative to the table (312).

2. The track saw system (100; 1004) of claim 1, wherein the first hinge is also configured to laterally translate the track (108; 1008) with respect to the base (300; 1300).

3. The track saw system (100; 1004) of claims 1 or 2, wherein the second hinge is also configured to translate the track (108; 1008) to adjust a height of the track with respect to the base (300; 1300).

4. The track saw system (100; 1004) of any one of claims 1 to 3, wherein the arm (304) is a first arm, and wherein the base (300; 1300) further includes a second arm (304) slidable relative to the table (312) and a first extension tube (144) extending between the first and second arms (304).

5. The track saw system (100; 1004) of any one of claims 1 to 3, further comprising:
a first extension tube (144) extending from the base (300; 1300); and
a cross-fitting (140) having a first bore through which the first extension tube (144) is received,
wherein a combination of the first extension tube (144) and the cross-fitting (140) defines the first hinge.

6. The track saw system (100; 1004) of claim 5, further comprising a second extension tube (136) that extends generally orthogonal from the track (108; 1008), wherein the cross-fitting (140) includes a second bore through which the second extension tube (136) is received.

7. The track saw system (100; 1004) of claim 6,
wherein the first and second bores in the cross-fitting (140) define first and second axes (180, 160), respectively, and wherein the first and second axes are offset and oriented orthogonal to each other, or
wherein a combination of the second extension tube (136) and the cross-fitting (140) defines the second hinge.

8. The track saw system (100; 1004) of claim 6, wherein a position of the cross-fitting (140) is independently adjustable both rotationally about and translationally along both the first extension tube (144) and the second extension tube (136).

9. The track saw system (100; 1004) of claim 6,
further comprising a locking mechanism configured to lock the rotational position of the second extension tube, and thus the track (108; 1008), relative to the cross-fitting (140) about the second pivot axis (160), or
further comprising a locking mechanism configured to lock the axial position of the cross-fitting (140), and thus the track (108; 1008), relative to the first extension tube along the first pivot axis (180).

10. The track saw system (100; 1004) of any preceding claims, further comprising a bracket (132) to which the track (108; 1008) is removably coupled, wherein the bracket includes a handle portion (164) configured to be grasped by an operator to adjust the miter angle of the track (108; 1008).

11. The track saw system (100; 1004) of any preceding claim, further comprising a miter gauge indicating assembly (412; 512; 612; 712) including a miter scale (415; 515; 615; 715) and a pointer (413; 513; 613; 713), wherein the miter gauge indicating assembly is configured to indicate the miter angle of the track (108; 1008) relative to the edge (208).

12. The track saw system (100; 1004) of claim 11,
wherein the miter scale (415; 515) is beneath the track (108; 1008) and is configured to abut the edge (E) of the work piece (W); and optionally
wherein the pointer (413; 513) is defined on the track (108; 1008), or
wherein the track (108; 1008) includes a window (517) therethrough to provide a line of sight through the track (108; 1008) to the miter scale (515) beneath the track.

13. The track saw system (100; 1004) of claim 11,
wherein the miter scale (615) is provided on a top surface of the track (108; 1008), and wherein the pointer (613) is provided by aligning the edge of the work piece with a desired miter angle shown on the miter scale

14. The track saw system (100; 1004) of claim 11, wherein the miter scale (715) is offset from the track (108; 1008) to provide a line of sight to the miter scale without interference from the track, and optionally
wherein the miter angle indicating assembly (712) includes a linkage mechanism (717) coupling the track (108; 1008) to the pointer (713), and wherein the pointer is movable relative to the miter scale (715) to indicate the miter angle of the track (108; 1008) relative to the edge (E) of the work piece (W).

15. The track saw system (100; 1004) of any preceding claim, further comprising a saw (104) supported upon the track (108; 1008) for sliding movement therewith.

## Patentansprüche

1. Schienensägensystem (100; 1004), das konfiguriert ist, um einen geraden Schnitt in einem Werkstück (W) herzustellen, das auf einem Gestell (200; 1200) gestützt ist, wobei das Schienensägensystem umfasst:
eine Basis (300; 1300), die für die Befestigung an dem Gestell (200; 1200) konfiguriert ist, wobei die Basis einen Kantenpositionierer (308) aufweist, mit dem das Werkstück (W) in Eingriff bringbar ist;
eine Schiene (108; 1008), die schwenkbar mit der Basis (300; 1300) gekoppelt ist;
ein erstes Scharnier, das die Schiene (108; 1008) um eine erste Schwenkachse (180) schwenkbar mit der Basis (300; 1300) koppelt, um eine Schwenkbewegung der Schiene in Bezug auf die Basis in einer Richtung zu ermöglichen, die sich von der Basis weg erstreckt; und
ein zweites Scharnier, das die Schiene (108; 1008) um eine zweite Schwenkachse (160) quer zu der ersten Schwenkachse (180) schwenkbar mit der Basis (300; 1300) koppelt, um eine Schwenkbewegung der Schiene in Bezug auf die Basis zu ermöglichen, um einen Gehrungswinkel zwischen der Schiene (108; 1008) und der Kante (308) zu ermöglichen;
wobei
die Basis (300; 1300) einen Tisch (312) einschließt, der auf dem Gestell (200; 1200) stützbar ist, **dadurch gekennzeichnet, dass** die Basis ferner einen Arm (304) einschließt, mit dem der Kantenpositionierer (308) gekoppelt ist, und wobei der Arm (304) in Bezug auf den Tisch (312) verschiebbar ist, um die Position des Kantenpositionierers (308) in Bezug auf den Tisch (312) einzustellen.

2. Schienensägensystem (100; 1004) nach Anspruch 1, wobei das erste Scharnier auch konfiguriert ist, um die Schiene (108; 1008) in Bezug auf die Basis (300; 1300) seitlich umzusetzen.

3. Schienensägensystem (100; 1004) nach einem der Ansprüche 1 oder 2, wobei das zweite Scharnier auch konfiguriert ist, um die Schiene (108; 1008) umzusetzen, um eine Höhe der Schiene in Bezug auf die Basis (300; 1300) einzustellen.

4. Schienensägensystem (100; 1004) nach einem der Ansprüche 1 bis 3, wobei der Arm (304) ein erster Arm ist, und wobei die Basis (300; 1300) ferner einen zweiten Arm (304), der in Bezug auf den Tisch (312) verschiebbar ist, und ein erstes Verlängerungsrohr (144), das sich zwischen dem ersten und dem zweiten Arm (304) erstreckt, einschließt.

5. Schienensägensystem (100; 1004) nach einem der Ansprüche 1 bis 3, ferner umfassend:
ein erstes Verlängerungsrohr (144), das sich von der Basis (300; 1300) erstreckt; und
eine Kreuzverschraubung (140) mit einer ersten Bohrung, durch die das erste Verlängerungsrohr (144) aufgenommen wird,
wobei eine Kombination aus dem ersten Verlängerungsrohr (144) und der Kreuzverschraubung (140) das erste Scharnier definiert.

6. Schienensägensystem (100; 1004) nach Anspruch 5, ferner umfassend ein zweites Verlängerungsrohr (136), das sich im Allgemeinen rechtwinklig von der Schiene (108; 1008) erstreckt, wobei die Kreuzverschraubung (140) eine zweite Bohrung einschließt, durch die das zweite Verlängerungsrohr (136) aufgenommen wird.

7. Schienensägensystem (100; 1004) nach Anspruch 6, wobei die erste und die zweite Bohrung in der Kreuzverschraubung (140) die erste bzw. die zweite Achse (180, 160) definieren, und wobei die erste und die zweite Achse versetzt und rechtwinklig zueinander ausgerichtet sind, oder
wobei eine Kombination aus dem zweiten Verlängerungsrohr (136) und der Kreuzverschraubung (140) das zweite Scharnier definiert.

8. Schienensägensystem (100; 1004) nach Anspruch 6, wobei eine Position der Kreuzverschraubung (140) sowohl drehbar um als auch translatorisch entlang sowohl des ersten Verlängerungsrohrs (144) als auch des zweiten Verlängerungsrohrs (136) unabhängig einstellbar ist.

9. Schienensägensystem (100; 1004) nach Anspruch 6, ferner umfassend einen Verriegelungsmechanismus, der konfiguriert ist, um die Drehposition des zweiten Verlängerungsrohrs, und somit die Schiene (108; 1008), in Bezug auf die Kreuzverschraubung (140) um die zweite Schwenkachse (160) zu verriegeln, oder
ferner umfassend einen Verriegelungsmechanismus, der konfiguriert ist, um die axiale Position der Kreuzverschraubung (140), und somit die Schiene (108; 1008), in Bezug auf das erste Verlängerungsrohr entlang der ersten Schwenkachse (180) zu verriegeln.

10. Schienensägensystem (100; 1004) nach einem der vorstehenden Ansprüche, ferner umfassend eine Halterung (132), mit der die Schiene (108; 1008) abnehmbar gekoppelt ist, wobei die Halterung einen Griffabschnitt (164) einschließt, der dazu konfiguriert ist, von einem Bediener gegriffen zu werden, um den Gehrungswinkel der Schiene (108; 1008) einzustellen.

11. Schienensägensystem (100; 1004) nach einem der vorstehenden Ansprüche, ferner umfassend eine Gehrungslehren-Anzeigeanordnung (412; 512; 612; 712), die eine Gehrungsskala (415; 515; 615; 715) und einen Zeiger (413; 513; 613; 713) einschließt, wobei die Gehrungslehren-Anzeigeanordnung konfiguriert ist, um den Gehrungswinkel der Schiene (108; 1008) in Bezug auf die Kante (208) anzuzeigen.

12. Schienensägensystem (100; 1004) nach Anspruch 11, wobei sich die Gehrungsskala (415; 515) unterhalb der Schiene (108; 1008) befindet und konfiguriert ist, um an der Kante (E) des Werkstücks (W) anzustoßen; und optional
wobei der Zeiger (413; 513) auf der Schiene (108; 1008) definiert ist, oder
wobei die Schiene (108; 1008) ein Fenster (517) dadurch einschließt, um eine Sichtlinie durch die Schiene (108; 1008) zu der Gehrungsskala (515) unterhalb der Schiene bereitzustellen.

13. Schienensägensystem (100; 1004) nach Anspruch 11, wobei die Gehrungsskala (615) auf einer oberen Oberfläche der Schiene (108; 1008) bereitgestellt ist, und wobei der Zeiger (613) durch Ausrichten der Kante des Werkstücks mit einem gewünschten, auf der Gehrungsskala gezeigten Gehrungswinkel bereitgestellt wird.

14. Schienensägensystem (100; 1004) nach Anspruch 11, wobei die Gehrungsskala (715) von der Schiene (108; 1008) versetzt ist, um eine Sichtlinie zu der Gehrungsskala ohne Störung durch die Schiene bereitzustellen, und optional
wobei die Gehrungswinkel-Anzeigeanordnung (712) einen Gestängemechanismus (717) einschließt, der die Schiene (108; 1008) mit dem Zeiger (713) koppelt, und wobei der Zeiger in Bezug auf die Gehrungsskala (715) beweglich ist, um den Gehrungswinkel der Schiene (108; 1008) in Bezug auf die Kante (E) des Werkstücks (W) anzuzeigen.

15. Schienensägensystem (100; 1004) nach einem der vorstehenden Ansprüche, ferner umfassend eine Säge (104), die auf der Schiene (108; 1008) zur Gleitbewegung damit gestützt ist.

## Revendications

1. Système de scie à rail (100 ; 1004) configuré pour réaliser une coupe droite dans une pièce à usiner (W) supportée sur un support (200 ; 1200), le système de scie à rail comprenant :
une base (300 ; 1300) configurée pour une fixation au support (200 ; 1200), la base ayant un localisateur de bord (308) contre lequel la pièce à usiner (W) peut être mise en prise ;
un rail (108 ; 1008) couplé de manière pivotante à la base (300 ; 1300) ;
une première charnière couplant de manière pivotante le rail (108 ; 1008) à la base (300 ; 1300) autour d'un premier axe de pivot (180) pour permettre un mouvement de pivotement du rail par rapport à la base dans une direction s'étendant à l'écart de la base ; et
une seconde charnière couplant de manière pivotante le rail (108 ; 1008) à la base (300 ; 1300) autour d'un second axe de pivot (160) transversal au premier axe de pivot (180) pour permettre un mouvement de pivotement du rail par rapport à la base pour ajuster un angle d'onglet entre le rail (108 ; 1008) et le bord (308) ;
dans lequel
la base (300 ; 1300) inclut une table (312) pouvant être supportée sur le support (200 ; 1200), **caractérisé en ce que** la base inclut en outre un bras (304) auquel le localisateur de bord (308) est couplé, et dans lequel le bras (304) peut coulisser par rapport à la table (312) pour ajuster l'emplacement du localisateur de bord (308) par rapport à la table (312).

2. Système de scie à rail (100 ; 1004) selon la revendication 1, dans lequel la première charnière est également configurée pour déplacer latéralement le rail (108 ; 1008) par rapport à la base (300 ; 1300).

3. Système de scie à rail (100 ; 1004) selon la revendication 1 ou 2, dans lequel la seconde charnière est également configurée pour déplacer latéralement le rail (108 ; 1008) pour ajuster une hauteur du rail par rapport à la base (300 ; 1300).

4. Système de scie à rail (100 ; 1004) selon l'une quelconque des revendications 1 à 3, dans lequel le bras (304) est un premier bras, et dans lequel la base (300 ; 1300) inclut en outre un second bras (304) pouvant coulisser par rapport à la table (312) et un premier tube d'extension (144) s'étendant entre les premier et second bras (304).

5. Système de scie à rail (100 ; 1004) selon l'une quelconque des revendications 1 à 3, comprenant en outre :
un premier tube d'extension (144) s'étendant à partir de la base (300 ; 1300) ; et
un raccord en croix (140) ayant un premier alésage à travers lequel le premier tube d'extension (144) est reçu,
dans lequel une combinaison du premier tube d'extension (144) et du raccord en croix (140) définit la première charnière.

6. Système de scie à rail (100 ; 1004) selon la revendication 5, comprenant en outre un second tube d'extension (136) qui s'étend généralement orthogonalement à partir du rail (108 ; 1008), dans lequel le raccord en croix (140) inclut un second alésage à travers lequel le second tube d'extension (136) est reçu.

7. Système de scie à rail (100 ; 1004) selon la revendication 6, dans lequel les premier et second alésages dans le raccord en croix (140) définissent des premier et second axes (180, 160), respectivement, et dans lequel les premier et second axes sont décalés et orientés orthogonalement l'un par rapport à l'autre, ou
dans lequel une combinaison du second tube d'extension (136) et du raccord en croix (140) définit la seconde charnière.

8. Système de scie à rail (100 ; 1004) selon la revendication 6, dans lequel une position du raccord en croix (140) est indépendamment réglable à la fois en rotation autour et en translation le long du premier tube d'extension (144) et du second tube d'extension (136) à la fois.

9. Système de scie à rail (100 ; 1004) selon la revendication 6, comprenant en outre un mécanisme de verrouillage configuré pour verrouiller la position de rotation du second tube d'extension, et donc le rail (108 ; 1008), par rapport au raccord en croix (140) autour du second axe de pivot (160), ou
comprenant en outre un mécanisme de verrouillage configuré pour verrouiller la position axiale du raccord en croix (140), et donc le rail (108 ; 1008), par rapport au premier tube d'extension le long du premier axe de pivot (180).

10. Système de scie à rail (100 ; 1004) selon l'une quelconque des revendications précédentes, comprenant en outre un gousset (132) auquel le rail (108 ; 1008) est couplé de manière amovible, dans lequel le gousset inclut une partie de poignée (164) configurée pour être saisie par un opérateur pour ajuster l'angle d'onglet du rail (108 ; 1008).

11. Système de scie à rail (100 ; 1004) selon l'une quelconque revendication précédente, comprenant en outre un ensemble d'indication de guide d'onglet (412 ; 512 ; 612 ; 712) incluant une échelle à onglet (415 ; 515 ; 615 ; 715) et un pointeur (413 ; 513 ; 613 ; 713), dans lequel l'ensemble d'indication de guide d'onglet est configuré pour indiquer l'angle d'onglet du rail (108 ; 1008) par rapport au bord (208).

12. Système de scie à rail (100 ; 1004) selon la revendication 11, dans lequel l'échelle à onglet (415 ; 515) est sous le rail (108 ; 1008) et est configurée pour venir en butée contre le bord (E) de la pièce à usiner (W) ; et éventuellement
dans lequel le pointeur (413 ; 513) est défini sur le rail (108 ; 1008), ou
dans lequel le rail (108 ; 1008) inclut une fenêtre (517) à travers celui-ci pour fournir une ligne de visée à travers le rail (108 ; 1008) vers l'échelle à onglet (515) sous le rail.

13. Système de scie à rail (100 ; 1004) selon la revendication 11, dans lequel l'échelle à onglet (615) est fournie sur une surface supérieure du rail (108 ; 1008), et dans lequel le pointeur (613) est fourni en alignant le bord de la pièce à usiner sur un angle d'onglet souhaité montré sur l'échelle à onglet.

14. Système de scie à rail (100 ; 1004) selon la revendication 11, dans lequel l'échelle à onglet (715) est décalée du rail (108 ; 1008) pour fournir une ligne de visée vers l'échelle à onglet sans interférence du rail, et éventuellement
dans lequel l'ensemble d'indication d'angle d'onglet (712) inclut un mécanisme de liaison (717) couplant le rail (108 ; 1008) au pointeur (713), et dans lequel le pointeur est mobile par rapport à l'échelle à onglet (715) pour indiquer l'angle d'onglet du rail (108 ; 1008) par rapport au bord (E) de la pièce à usiner (W).

15. Système de scie à rail (100 ; 1004) selon l'une quelconque revendication précédente, comprenant en outre une scie (104) supportée sur le rail (108 ; 1008) pour un mouvement de coulissement avec celui-ci.
